(19) Europäisches Patentamt
European Patent Office
Office européen des brevets

(11) **EP 4 657 745 A1**

(12) **EUROPEAN PATENT APPLICATION**

(43) Date of publication:
**03.12.2025 Bulletin 2025/49**

(21) Application number: **25178678.6**

(22) Date of filing: **25.05.2025**

(51) International Patent Classification (IPC):
*H02P 6/00* (2016.01)          *H02P 6/18* (2016.01)
*H02P 27/08* (2006.01)

(52) Cooperative Patent Classification (CPC):
**H02P 6/186; H02P 6/007; H02P 27/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.05.2024 EP 24178218**

(71) Applicant: **Melexis Technologies NV
3980 Tessenderlo-Ham (BE)**

(72) Inventors:
• **MOONS, Marnix
  3980 Tessenderlo-Ham (BE)**
• **LAMBRECHTS, Marc
  3980 Tessenderlo-Ham (BE)**

(74) Representative: **Winger
Mouterij 16 bus 101
3190 Boortmeerbeek (BE)**

Remarks:
Amended claims in accordance with Rule 137(2)
EPC.

(54) **ROTOR ANGLE ESTIMATION**

(57)    A method for rotor angle estimation for a 3-phase BLDC or stepper motor with a saliency ratio different from 1 includes receiving a requested duty cycle per motor phase from a motor control algorithm or deriving it from an output voltage per motor phase. The method involves providing a PWM pattern to each motor phase during operation, where the PWM pattern per motor phase matches the requested duty cycle or includes an equal fixed additional duty cycle. Current slopes in each motor phase are measured during active PWM pulses, and these measured current slopes or their average are compared to estimate the rotor angle.

100

110 | Rx duty cycle/phase

120 | Provide PWM pattern

130 | Measure current slope/phase

140 | Comparing slopes

> 141 Computing ref. slope
> 142 Determining norm. slopes
> 143 Transforming into 2D profile

150 | Estim. rotor angle

**FIG. 1**

## Description

### Field of the invention

The present invention relates to the field of motor control systems, specifically to methods and devices for rotor angle estimation in electric motors such as BLDC and stepper motors which wherein the methods and device do not need a position sensor for estimating the rotor angle.

### Background of the invention

In the realm of motor control, particularly for applications involving Brushless DC (BLDC) and stepper motors, precise control of the motor's rotor relative to the stator is crucial for optimal performance. This precision is especially significant in systems utilizing Field Oriented Control (FOC), where the alignment of the rotor's magnetic field with the stator's magnetic field is essential for efficient operation. Misalignment can lead to suboptimal motor performance, increased energy consumption, and undesirable acoustic noise.

One of the primary challenges in achieving this precise control is accurately determining the rotor's position, especially when the motor is operating at low speeds or is stationary. Traditional sensor-based methods, while effective, add additional cost and complexity to the motor system. These position sensors can be susceptible to environmental factors and wear over time, potentially affecting their accuracy and reliability.

Sensorless methods offer an alternative by eliminating the need for physical position sensors. However, existing sensorless techniques often struggle at low speeds due to insufficient back electromotive force (BEMF) and reduced current flow, which are critical signals for these methods. The low BEMF and current make it difficult to accurately detect the rotor's position because the signals are too weak to be differentiated from noise.

Despite advancements in sensorless motor control technologies, there remains a significant need for further innovation in this field. Improved methods that can reliably determine rotor position at low speeds and when stationary, without the drawbacks associated with current sensor-based and sensorless techniques, would represent a substantial advancement in motor control technology. Such developments could lead to more efficient, cost-effective, and versatile motor control systems, capable of meeting the increasingly demanding requirements of modern applications.

### Summary of the invention

It is an object of embodiments of the present invention to provide a good method and device to estimate the rotor angle of a motor during operation without making use of a position sensor.

In the first aspect, the present invention relates to a method for rotor angle estimation for a 3-phase BLDC or for a 3-phase stepper motor which has a saliency ratio different from 1. The method comprises:

- receiving a requested duty cycle per motor phase from a motor control algorithm or receiving an output voltage per motor phase and deriving therefrom a requested duty cycle per motor phase,
- providing a PWM pattern to each of the motor phases during motor operation, wherein the PWM pattern per motor phase has the requested duty cycle per motor phase or wherein the PWM pattern per motor phase has the requested duty cycle per motor phase plus an equal fixed amount of duty cycle to each of the requested duty cycles,
- measuring the current slopes of each motor phase during one or more active PWM pulses of that phase during the provided cycle of PWM pattern thereby obtaining a current slope per motor phase wherein the obtained current slope per motor phase is obtained from one current slope measurement per motor phase or as an average of a plurality of current slope measurements per motor phase,
- comparing normalized current slopes of the motor phases and estimating the rotor angle based on the comparison wherein the normalized current slopes are obtained by normalizing the obtained current slopes of each phase using the obtained slope information collectively from all motor phases.

It is an advantage of embodiments of the present invention that the rotor angle can be estimated while driving the motor. This is achieved by measuring the current slope in each of the motor phases and by comparing the normalized current slopes. It is an advantage of embodiments of the present invention that no position sensor is required for estimating the rotor angle.

In a method according to embodiments of the present invention, the current slopes are normalized and based on the comparison the rotor angle is estimated. The normalized current slopes are obtained by normalizing the obtained current slopes of each phase using the obtained slope information collectively from all motor phases. This ensures that the inter-phase saliency differences are directly emphasized, enabling robust inter-phase comparisons. This, in contrast with methods where the data is normalized by taking differences between current slopes of the same phase, measured under different voltage vector conditions. While this captures intra-phase characteristics, it does not facilitate a direct comparison of saliency between phases. In embodiments of the present invention a fixed additional duty cycle may be added to each of the requested duty cycles per motor phase. By doing so it is guaranteed that there are no phases with zero duty cycle, thus making it possible to measure the current slope in all the motor phases. The duty cycle should be large enough to measure 2 times the current in order to calculate the slope. It is, moreover, advantageous that adding an equal fixed amount of duty cycle to all of the motor phases doesn't alter the applied voltage vector.

In alternative embodiments, if all duty cycles are long enough, it is not needed to add an equal fixed amount of duty cycle to all of the motor phases.

In embodiments of the present invention the current slopes which are measured at substantially the same rotor angle are used for obtaining the normalized current slopes which are compared for estimating the rotor angle.

In embodiments of the present invention the PWM pulses do not overlap during intervals when the current is measured. It is an advantage of embodiments of the present invention that a single current sensor (e.g. a low side shunt) can be used for measuring the current slope of each motor phase.

In embodiments of the present invention measuring the current slopes of each motor phase may imply measuring the current of each motor phase at two different time points during the active PWM pulses of that phase and calculating the current slope by making the difference between the measured currents at the two different time points. This provides a simple way to determine the current slopes.

In embodiments of the present invention comparing the normalized current slopes may comprise:

- computing a reference current slope by averaging the current slopes of all motor phases,
- determining a normalized current slope (which may also be referred to as a relative current slope) per motor phase for each obtained current slope by subtracting the reference current slope from the obtained current slope or by subtracting the obtained current slope from the reference current slope or vice versa,
- transforming the normalized current slopes for the three phases in a two-dimensional current slope profile,

and wherein estimating the rotor angle may be done based on the two-dimensional current slope profile.

In embodiments of the present invention the current slopes, measured during the provided pattern of PWM pulses, of all motor phases are averaged for obtaining the reference current slope.

In the present invention, the current slopes of a phase are measured during active PWM pulses applied to that phase, directly linking the measurements to the operational characteristics of the respective phase, and this for each of the different phases. This enables a more localized and accurate determination of rotor position by leveraging the saliency of the motor.

As a result, the present invention uniquely focuses on the motor's phase-specific characteristics in a manner that enables robust inter-phase comparisons.

In contrast, prior art solution sometimes introduce centring the current derivative signals around zero using an offset correction, but this does not achieve the same effect as determining normalized current slopes as in the present invention. The offset correction may eliminate baseline drift but does not isolate or emphasize inter-phase saliency differences critical for accurate rotor angle estimation.

In embodiments of the present invention the current slopes are normalized by calculating a relative slope for each phase, achieved by subtracting a reference slope-obtained by averaging the current slopes of all motor phases -from the measured slope, or vice versa. This ensures that the inter-phase saliency differences are directly emphasized, enabling robust inter-phase comparisons.

In embodiments of the present invention transforming the normalized current slopes for the three phases in a two-dimensional current slope profile may be done by performing a Clarke transformation on the normalized current slopes, thus obtaining an $\alpha$-component and a $\beta$-component for the current slope profile.

In embodiments of the present invention the estimating the rotor angle may be done based on the arctangent of the ratio of the $\beta$-component and the $\alpha$-component or based on the atan2 of the $\beta$-component and the $\alpha$-component.

In embodiments of the present invention estimating the rotor angle may be based on the comparison and based on a rotor angle of an earlier position of the rotor.

In the second aspect, the present invention relates to a device for rotor angle estimation of a 3-phase BLDC or stepper motor which has a saliency ratio different from 1, comprising:

- a processor configured to obtain a duty cycle per motor phase from a motor control algorithm or receiving an output voltage per motor phase and deriving therefrom a requested duty cycle per motor phase and calculating a duty cycle per phase
- a PWM controller configured to apply a PWM pattern to each motor phase wherein the PWM pattern per motor phase has the requested duty cycle per motor phase or wherein the PWM pattern per motor phase has the requested duty cycle per motor phase plus an equal fixed amount of duty cycle to each of the requested duty cycles,

- at least one current sensor for measuring current slopes of each motor phase during one or more active PWM pulses of that motor phase for obtaining a current slope per motor phase wherein the obtained current slope per motor phase is obtained from one current slope measurement per motor phase or as an average of a plurality of current slope measurements per motor phase,

wherein the processor is configured for comparing normalized current slopes and estimating the rotor angle based on the comparison wherein the normalized current slopes are obtained by normalizing the obtained current slopes of each phase using the obtained slope information collectively from all motor phases.

In embodiments of the present invention the PWM controller may be configured to apply the pattern of PWM pulses to each motor phases such that they are non-overlapping during intervals when the current is measured and wherein the at least one current sensor may be a single current sensor.

It is an advantage of embodiments of the present invention that a single current sensor can be used for measuring the current slopes. A single current sensor can be used when the PWM pulses are non-overlapping while measuring the current slope. With non-overlapping PWM pulses while measuring the current slope all current slopes can be calculated using this one current sensor which is measuring at different moments in time.

In case there are multiple current sensors the PWM pulses could become overlapping while measuring the current slope, also making it possible to use this method at much higher speeds.

In embodiments of the present invention calculating the current slope by making the difference between the measured currents may be implemented in the processor.

In embodiments of the present invention the at least one current sensor may be configured for measuring the current slopes for each of the phases by measuring the current of each motor phase at two different time points during the active PWM pulses of that phase and calculating the current slope by making the difference between the measured currents at the two different time points.

In embodiments of the present invention the processor may be configured for comparing the normalized current slopes by:

- computing a reference current slope by averaging the current slopes of all motor phases,
- determining the normalized current slope per motor phase for each obtained current slope of that phase by subtracting the reference current slope from the obtained current slope or vice versa,
- transforming the normalized current slopes for the three phases in a two-dimensional current slope profile,

and wherein the processor may be configured for estimating the rotor angle based on the two-dimensional current slope profile.

In embodiments of the present invention the processor may be configured for transforming the normalized current slopes for the three phases in a two-dimensional current slope profile by performing a Clarke transformation on the normalized current slopes, thus obtaining an $\alpha$-component and a $\beta$-component for the current slope profile.

In embodiments of the present invention the processor may be configured for estimating the rotor angle based on the arctangent of the ratio of the $\beta$-component and the $\alpha$-component or based on the atan2 of the $\beta$-component and the $\alpha$-component.

In embodiments of the present invention the processor may be configured for estimating the rotor angle based on the comparison and based on a rotor angle of an earlier position of the rotor.

In the third aspect, the present invention relates to a system for controlling a 3-phase motor which is a BLDC or a stepper motor, wherein the system comprises the 3-phase motor and wherein the 3-phase motor has a saliency ratio different from 1, and a device according to any embodiments of the second aspect, wherein the system is configured driving the motor according to the rotor angle estimations provided by the rotor angle estimation device. This provides a complete motor control system with rotor angle estimation.

It is an advantage of embodiments of the present invention that the rotor angle can be estimated without the need for direct visual or physical access to the rotor itself, which is particularly beneficial in enclosed or compact motor designs where space and access are limited. It is a further advantage of embodiments of the present invention that the estimation of the rotor angle can be achieved even when the motor is stationary or operating at low speeds, where traditional methods based on back electromotive force (BEMF) are less effective or inapplicable. This capability extends the utility of the invention to a wider range of applications, including those involving low-speed operations and precise positioning tasks.

Moreover, it is an advantage of embodiments of the present invention that the method can be implemented using a single current sensor, which simplifies the hardware requirements and potentially reduces the cost and complexity of the motor control system. This single sensor approach also aids in minimizing the physical footprint of the control system, an important factor in many modern, compact applications. Additionally, the use of non-overlapping PWM pulses, while measuring the current slopes, ensures that accurate current measurements can be taken without interference from other phases, enhancing the reliability and accuracy of the rotor angle estimation. In embodiments of the present invention the PWM pulses may even be completely non-overlapping or only have a substantially zero overlap.

It is also an advantage of embodiments of the present invention that the addition of a fixed amount of duty cycle to each phase ensures that there are no phases with zero duty cycle, thereby allowing continuous monitoring and control of the motor regardless of its operational state. The duty cycle should be large enough to measure 2 times the current in order to calculate the slope.

Furthermore, it is an advantage of embodiments of the present invention that the method facilitates the implementation of field-oriented control (FOC) techniques even at standstill or low speeds, thereby maximizing torque production and improving the efficiency and responsiveness of the motor control system.

In addition, it is an advantage of embodiments of the present invention that the rotor angle estimation is based on current slopes rather than absolute current values, which may provide more sensitive and accurate detection of rotor position changes.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1 shows a flow chart of a method for rotor angle estimation in a 3-phase BLDC or stepper motor according to embodiments of the present invention.

FIG. 2 shows a schematic block diagram of a device for rotor angle estimation in a 3-phase BLDC or stepper motor according to embodiments of the present invention.

FIG. 3 shows an illustration of starting PWM pulses which have a requested duty cycle per motor phase.

FIG. 4 shows an illustration of PWM pulses which have the requested duty cycle per motor phase plus an equal fixed amount of duty cycle added to each of the requested duty cycles plus phase shifting to make the pulses non-overlapping according to embodiments of the present invention.

FIG. 5 shows an illustration of how a current slope during an active PWM pulse can be obtained in a method or device according to embodiments of the present invention.

FIG. 6 shows a graph showing the atan2 of the $\beta$-component and the $\alpha$-component for the current slope profile in function of the real rotor angle, obtained using a method or device according to embodiments of the present invention.

FIG. 7 shows a graph showing an estimated rotor angle in function of the real rotor angle, obtained using a method or device according to embodiments of the present invention.

FIG. 8 shows a graph showing an estimated rotor angle in function of the real rotor angle and a voltage vector applied 90° further than the estimated rotor angle using a method or device according to embodiments of the present invention.

FIG. 9 shows a graph similar to FIG. 8 with the addition that a Kalman filter is applied to the estimated rotor angle according to embodiments of the present invention.

FIG. 10 shows a schematic drawing of a bridge driver for a 3-phase motor, with a single shunt resistor between the low-side transistors and the ground.

In the different figures, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

Where in embodiments of the present invention reference is made to providing a PWM pattern to a motor phase this implies that the provided PWM pattern is applied to the motor phase.

Where in embodiments of the present invention reference is made to the term "saliency ratio" reference is made to the ratio of the inductance along the direct axis (Ld) to the inductance along the quadrature axis (Lq) of the motor. The direct axis (d-axis) aligns with the rotor's magnetic field, while the quadrature axis (q-axis) is perpendicular to it. A saliency ratio different from 1 indicates that the motor has magnetic anisotropy, meaning that the magnetic reluctance of the rotor varies with the angular position of the rotor. In embodiments of the present invention the saliency ratio may for example be smaller than 0.9 or even smaller than 0.8 or the saliency ratio may for example be larger than 1.1 or even larger than 1.2. In case of 0.9 or 1.1 thresholds an inductance variation of at least 10 % is obtained. The induction variation should be large enough to allow estimating the rotor angle based on the comparison of the normalized current slopes of the motor phases.

Where in embodiments of the present invention reference is made to the term "requested duty cycle" reference is made to the desired proportion of time that a pulse-width modulation (PWM) signal is in the active state (e.g., high) during one PWM period.

Where in embodiments of the present invention reference is made to the term "PWM pattern", reference is made to the specific sequence and timing of electrical pulses applied to the motor's phase windings to control the movement of the rotor. This pattern is applied repetitively for driving the motor.

Where in embodiments of the present invention reference is made to the term "current slope" reference is made to the rate of change of current with respect to time (di/dt) in a motor phase winding. The current slope is measured during the active portion of the PWM pulse applied to the corresponding motor phase.

Where in embodiments of the present invention reference is made to the term "two-dimensional current slope profile" reference is made to a representation of the normalized current slopes of the three motor phases in a two-dimensional coordinate system. This can be obtained by applying a transformation, such as the Clarke transformation, to the normalized current slopes, resulting in an $\alpha$-component and a $\beta$-component that define the current slope profile.

Where in embodiments of the present invention reference is made to the term "Clarke transformation" reference is made to a mathematical transformation that converts a set of three-phase quantities (e.g., normalized current slopes) into a two-phase orthogonal coordinate system, typically denoted as $\alpha$-$\beta$ coordinates. The Clarke transformation is commonly used in motor control applications to simplify the analysis and control of three-phase systems.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

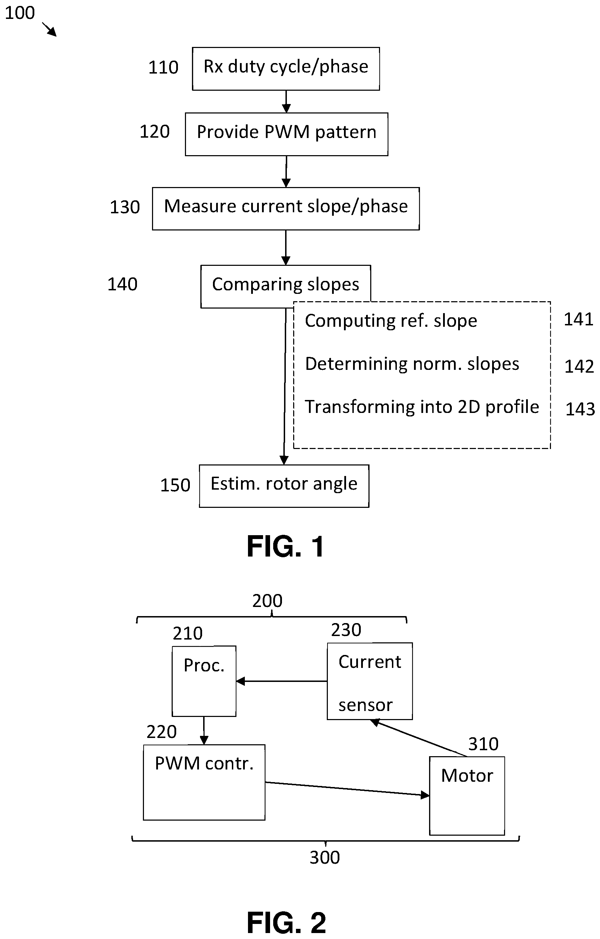

In a first aspect embodiments of the present invention relate to a method for rotor angle estimation of a 3-phase BLDC or stepper motor which has a saliency ratio different from 1. FIG. 1 shows an exemplary flow chart of such a method (100). The method comprises receiving (110) a requested duty cycle per motor phase from a motor control algorithm or receiving an output voltage per motor phase and deriving therefrom a requested duty cycle per motor phase. In embodiments of the present invention the motor control algorithm may return an output voltage per motor phase, from which a requested duty cycle per motor phase may be derived. The method further comprises providing (120) a pattern of PWM pulses to each of the motor phases during motor operation, wherein the PWM pattern per motor phase has the requested duty cycle per motor phase or wherein the PWM pattern per motor phase has the requested duty cycle per motor phase plus an equal fixed amount of duty cycle to each of the requested duty cycles. In embodiments of the present invention a PWM pattern is applied during a limited period of time such that all pulses of one pattern are performed at substantially the same rotor angle. In embodiments of the present invention the rotation speed of the rotor may for example be smaller than 1000 rotations per minute, implying that one rotation lasts at least 60 ms. If the duration of one PWM pattern is substantially 50 μs, this implies that all pulses of one pattern may be performed at substantially the same rotor angle. The current slopes of each motor phase are measured (130) during active PWM pulses of that phase during the provided PWM pattern. In embodiments of the present invention a single current sensor may be used for measuring the current slopes, when the PWM pulses are non-overlapping while measuring the current slope. With non-overlapping PWM pulses during intervals when the current slope is measured, all current slopes can be calculated using this one current sensor and measuring at different moments in time.

In other embodiments, if there are multiple current sensors, the PWM pulses could become overlapping during intervals when the current is measured, making it possible to use this method at much higher speeds. The at least one current sensor (230) could be a real current sensor (e.g., a magnetic current sensor), a shunt resistor over which a voltage drop is measured for calculating the current, or the current could be derived from the drain-source voltage of the driver transistor, knowing its Drain-Source On-Resistance (RDSon).

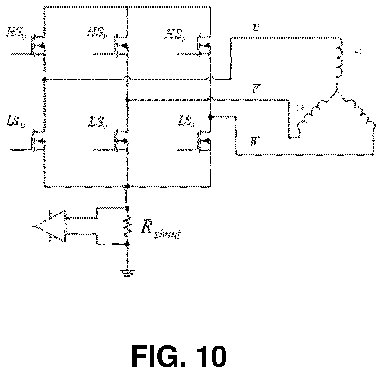

In embodiments of the present invention the single current sensor may be a single shunt resistor. In embodiments of the present invention, the single shunt resistor may be configured as either a low-side shunt resistor or a high-side shunt resistor. When configured as a low-side shunt resistor, it is positioned between the low-side transistors of the bridge driver and the ground (see for example FIG. 10). Alternatively, when configured as a high-side shunt resistor, it is positioned between the high-side transistors of the bridge driver and the supply voltage. This arrangement facilitates the measurement of current slopes in each motor phase, providing the data necessary for precise rotor angle estimation based on normalized current slopes obtained during motor operation.

It is also possible to use two shunts-one on the low side and one on the high side-but this is less common due to the higher cost of high-side IC op-amp circuitry. If multiple shunts are used for quasi-simultaneous current slope measurement of the three phases, a three-shunt configuration (either three low-side or three in-phase shunts) would be preferred for accuracy. However, the most cost-effective solution is a single shunt, which is an advantage of embodiments of the present invention. While using more than one shunt can improve accuracy, two- or three-shunt solutions are generally not preferred due to their higher cost. The shunt can be placed on either the low side or the high side, depending on the specific implementation.

The measured current slopes of the motor phases or an average of the measured current slopes of the motor phases are normalized using the obtained slope information collectively from all motor phases, and the normalized current slopes are compared (140) and the rotor angle is estimated (150) based on the comparison. This comparison may be done in various ways of which one example is illustrated by the steps (141), (142), (143) in FIG. 1. This will be explained further in the description. In embodiments of the present invention calculating the current slope by making the difference between the measured currents may be implemented in a processor (210).

In embodiments of the present invention, the obtained current slopes for each motor phase are measured during active PWM pulses applied to that specific phase. The measurement can be taken once per active pulse or as an average of multiple measurements over several PWM cycles. For instance, if the PWM pattern is repetitive over a set of cycles, the current slopes can be averaged across these cycles to improve robustness against noise or transient variations.

To further enhance the precision of rotor angle estimation, normalized current slopes are calculated by normalizing the obtained current slopes of each phase using collective slope information from all the motor phases. In embodiments of the present invention, the normalization removes the common component shared among the obtained current slopes of the different phases, allowing for a more precise differentiation of the unique characteristics of each phase. By doing so, the normalization emphasizes inter-phase saliency differences, enabling a more accurate determination of rotor position, even under varying operating conditions.

In embodiments of the present invention this normalization involves subtracting a reference slope derived from the collective slope information of all motor phases or vice versa. The reference slope may be computed as the average or median of the obtained current slopes across all phases. Also other normalizations of the obtained current slopes per phase are possible as long as the normalization of a current slope of a specific phase uses slope information (i.e. obtained current slopes) from all the motor phases. The obtained current slopes may for example be divided by the reference slope. Embodiments of the present invention are particularly suitable for motors with a saliency ratio different from 1, such as interior permanent magnet (IPM) motors or stepper motors. These IPM motors exhibit differences in Ld direct inductance and Lq quadrature inductance values which can be measured and analyzed via differences in phase-current slopes, which are leveraged by the method to accurately estimate the rotor angle without requiring physical position sensors. In a second aspect embodiments of the present invention relate to a device for rotor angle estimation of a 3-phase BLDC or stepper motor which has a saliency ratio different from 1. FIG. 2 shows a schematic block diagram of an exemplary device (200) for rotor angle estimation of a 3-phase BLDC or stepper motor. The device comprises a processor (210) configured to obtain a duty cycle per motor phase from a motor control algorithm or receiving an output voltage per motor phase and deriving therefrom a requested duty cycle per motor phase and calculating a duty cycle per phase. The device further comprises a PWM controller (220) configured to apply a PWM pattern to each motor phase wherein the PWM pattern per motor phase has the requested duty cycle per motor phase or wherein the PWM pattern per motor phase has the requested duty cycle per motor phase plus an equal fixed amount of duty cycle to each of the requested duty cycles. The device also includes at least one current sensor (230) for measuring current slopes during active PWM pulses in each of the motor phases and obtaining a current slope per motor phase wherein the obtained current slope per motor phase is obtained from one current slope measurement per motor phase or as an average of a plurality of current slope measurements per motor phase. The processor (210) is configured for comparing normalized current slopes and estimating the rotor angle based on the comparison. The normalized current slopes are obtained by normalizing the obtained current slopes of each phase using the obtained slope information collectively from all motor phases.

In a third aspect embodiments of the present invention relate to a system (300) for controlling a 3-phase motor which is a BLDC motor or a stepper motor. The system comprises the 3-phase motor and the 3-phase motor has a saliency ratio different from 1. The system, furthermore, comprises a device in accordance with embodiments of the present invention. The system is configured for driving the motor according to the rotor angle estimations provided by the rotor angle estimation device. A schematic drawing of an exemplary system in accordance with embodiments of the present invention is shown in FIG. 2.

In embodiments of the present invention a motor control algorithm (e.g. FOC or open loop control) returns an output voltage or duty cycle for all the motor phases.

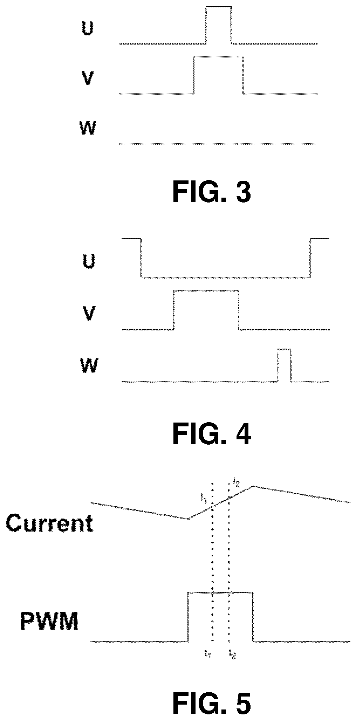

FIG. 3 shows for example starting PWM pulses that have a requested duty cycle per motor phase. The figure illustrates the duty cycles for phases U, V, and W of the motor (310). In this figure the duty cycle for phase W is zero.

In embodiments of the present invention where the duty cycle for one of the phases is zero a fixed amount of duty cycle is added to all of the motor phases. Adding an equal fixed amount of duty cycle to all the motor phases doesn't alter the applied voltage vector. It does make sure that there are no more phases with zero duty cycle, thus making it possible to measure the current slope in all the motor phases. This can even be done with a single current sensor on condition that the PWM pulses do not overlap during the intervals when the current is measured.

FIG. 4 shows PWM pulses that have the requested duty cycle per motor phase (as in the starting PWM pulses in FIG. 3) plus an equal fixed amount of duty cycle added to each of the requested duty cycles. The PWM pulses are phase shifted such that there is no overlap between the different PWM pulses for phases U, V, and W, during the intervals when the current is measured. In embodiments of the present invention phase shifting of the PWM pulses is not strictly required. In some embodiments the PWM pulses do not need to be phase shifted in order to be non-overlapping during the intervals when the current is measured. In alternative embodiments, where a plurality of current sensors is used the PWM pulses may be overlapping.

In the examples of FIG. 3 and FIG. 4 the motor control algorithm returned a phase U duty cycle of 12.5%, a phase V duty cycle of 25% and a phase W duty cycle of 0%. The duty cycles used are only exemplary. Also other duty cycles may be applied. A fixed amount of duty cycle equal to 6.25% in this example is added to all phases. When the W duty cycle is large enough it is not be required to add a fixed amount duty cycle to the different phases. The duty cycle should be large enough to measure at least 2 times the current in order to calculate the slope. This is dependent on different factors such as for example the speed of the ADC plus some signal processing time, and the electrical time constant. A typical duration may vary depending on the balance between taking a longer duration to be able to measure a higher current difference for more accurate measurements and taking a shorter duration to allow a higher speed range. A pulse width may for example be 5 $\mu$s (e.g. 10% of the duty cycle).

Next, the PWM pulses are phase shifted such that there is no overlap between the different PWM pulses, during the intervals when the current is measured. This has the advantage that a single current sensor can be used. Overlapping PWM pulses during the intervals when the current is measured may exist, but then different current sensors are required for measuring the phase currents.

FIG. 5 illustrates how a current slope during an active PWM pulse can be obtained. The currents $I_1$ and $I_2$ are measured at two different points in time $t_1$ and $t_2$ while the PWM pulse is active. The current slope dI/dt is then calculated as:

$$\frac{dI}{dt} = \frac{I_2 - I_1}{t_2 - t_1}$$

In embodiments of the present invention this is done for all motor phases, obtaining $\frac{dI_U}{dt}$, $\frac{dI_V}{dt}$ and $\frac{dI_W}{dt}$ for the 3-phase example. In embodiments of the present invention the division by dt is not strictly required to estimate the rotor angle by comparing the current slopes (e.g. if the same dt is used when measuring the current slopes). Next, it is possible to filter the current slopes in case this is desired.

In embodiments of the present invention the obtained current slopes are compared by the processor, which computes a reference current slope by averaging the current slopes of all motor phases. In embodiments of the present invention the reference current slope is calculated by taking the average of all current slopes:

$$\frac{dI_{ref}}{dt} = \frac{1}{3}\left(\frac{dI_U}{dt} + \frac{dI_V}{dt} + \frac{dI_W}{dt}\right)$$

In embodiments of the present invention the normalized current slopes per motor phase are determined by subtracting the reference current slope from each obtained current slope:

$$\frac{dI_{U,ref}}{dt} = \frac{dI_U}{dt} - \frac{dI_{ref}}{dt}$$

$$\frac{dI_{V,ref}}{dt} = \frac{dI_V}{dt} - \frac{dI_{ref}}{dt}$$

$$\frac{dI_{W,ref}}{dt} = \frac{dI_W}{dt} - \frac{dI_{ref}}{dt}$$

In embodiments of the present invention the normalized current slopes for the three phases are transformed into a two-dimensional current slope profile using a Clarke transformation, yielding an α-component and a β-component.

$$\frac{dI_\alpha}{dt} = \frac{dI_{U,ref}}{dt}$$

$$\frac{dI_\beta}{dt} = \frac{1}{\sqrt{3}}\left(\frac{dI_{V,ref}}{dt} - \frac{dI_{W,ref}}{dt}\right)$$

In embodiments of the present invention the rotor angle is estimated based on the two-dimensional current slope profile.

Specifically, the atan2 of the β-component to the α-component may be used to estimate the rotor angle. The angle of the found vector may for example be calculated as follows:

$$\theta = atan2\left(\frac{dI_\beta}{dt}, \frac{dI_\alpha}{dt}\right)$$

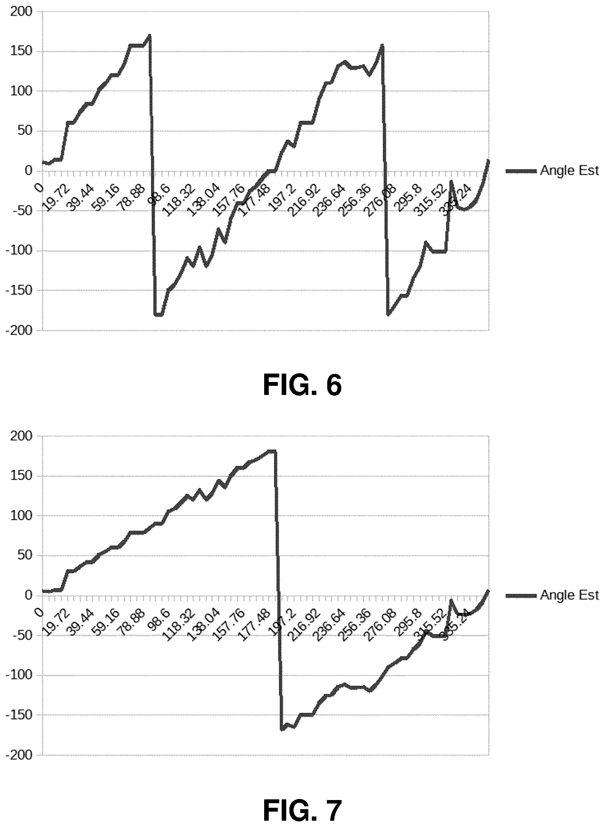

FIG. 6 shows a graph of the atan2 of the β-component and the α-component for the current slope profile as a function of the real rotor angle. The x-axis represents the real rotor angle in electrical degrees, while the y-axis represents the estimated rotor angle without correction in electrical degrees. The data was obtained while the motor (310) was running in open loop. A sudden stop in change of the observed rotor angle would indicate a motor stall.

Using above formula, one electrical rotation will result into two electrical rotations. In embodiments of the present invention this is converted back to one electrical rotation by dividing the angle by 2 and making a 180 electrical degree offset depending on when the magnet is faced north to south or south to north:

$$\theta = \frac{1}{2} atan2\left(\frac{dI_\beta}{dt}, \frac{dI_\alpha}{dt}\right) + f_{magnet}(\theta_{real})$$

If the output of the atan2 function is between -π and π:

$$f_{magnet}(\theta) = 0 \quad if\ 3\pi/2 < \theta < \pi/2$$

$$f_{magnet}(\theta) = \pi \quad if\ \pi/2 < \theta < 3\pi/2$$

If the output of the atan2 function is between 0 and 2π:

$$f_{magnet}(\theta) = 0 \quad if\ 0 < \theta < \pi$$

$$f_{magnet}(\theta) = \pi \quad if\ \pi < \theta < 2\pi$$

In embodiments of the present invention the arctangent of the ratio of the β-component and the α-component may be used for estimating the rotor angle based on a previous rotor angle estimation:

$$\theta = atan\left(\frac{dI_\beta/dt}{dI_\alpha/dt}\right)$$

The estimation also may consider the rotor angle of an earlier position of the rotor.
In embodiments of the present invention the first rotor position is determined using a traditional static rotor positioning algorithm. The first rotor position can for example be forced by a rotor alignment or it can be determined by a previous used motor control algorithm. In embodiments of the present invention an initial position detection (IPD) algorithm may be used to determine the initial position of the rotor or an alignment may force the initial position of the rotor.
In embodiments of the present invention all future angles can be calculated using following update equation:

$$\theta_{k+1} = \theta_k + \frac{1}{2}\left(atan2\left(\frac{dI_\beta}{dt}, \frac{dI_\alpha}{dt}\right) - atan2\left(\frac{dI_{\beta,prev}}{dt}, \frac{dI_{\alpha,prev}}{dt}\right)\right)$$

or

$$\theta_{k+1} = \theta_k + \frac{1}{2}\left(atan2\left(\frac{dI_\beta}{dt}, \frac{dI_\alpha}{dt}\right) - 2\theta_k\right)$$

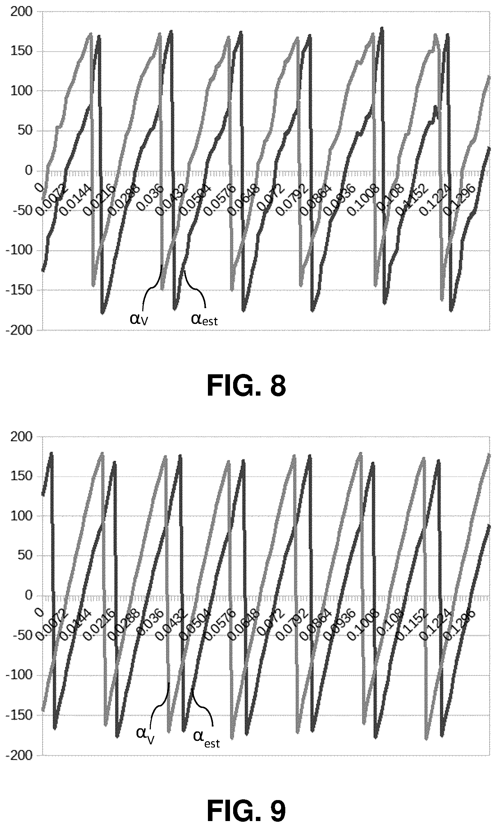

In embodiments of the present invention this result is immediately used for control, stall detection and/or for the update equation in the next iteration.
In embodiments of the present invention this result may be filtered (e.g. by using a Kalman filter) before using it for control, stall and/or the next update equation (update $\theta_k$ in the equation above with a filtered value).
FIG. 7 shows a graph of the estimated rotor angle as a function of the real rotor angle. The estimated rotor angle is obtained by applying corrections to convert the angle from two electrical rotations to one electrical rotation and making a 180 electrical degree offset depending on the magnet orientation.
It is an advantage of embodiments of the present invention that the saliency ratio is different from 1 as this will result in a difference in the current slopes of all the different phases. This difference in current slopes makes it possible to estimate the rotor angle.
A method or device in accordance with embodiments of the present invention may be used for estimating the rotor angle and for applying a voltage vector a predefined angle further than the estimated rotor angle. The predefined angle may for example be 90°. FIG. 8 shows a graph of the estimated rotor angle ($\alpha_{est}$) as a function of the real rotor angle, along with a voltage vector applied 90° further ($\alpha_v$) than the estimated rotor angle. This demonstrates using the estimated rotor angle determined by the invention to control the motor (310).

This is only one example of how the estimated rotor angle may be used. The invention is, however, not limited thereto. In embodiments of the present invention the estimated angle may be used in any existing FOC algorithm.

In an exemplary embodiment of the present invention the estimated angle may for example be used for the Park and inverse Park transformation when using Id/Iq control wherein Id is the direct axis current which is aligned with the rotor's magnetic field and Iq is the quadrature axis current which is perpendicular to the rotor's magnetic field.

In another exemplary embodiment of the present invention the estimated angle may be used for calculating the IB angle (angle between the current vector and the magnetic field vector) used in IB control.

FIG. 9 shows a graph similar to FIG. 8 with the addition of a Kalman filter applied to the estimated rotor angle. The Kalman filter helps to smooth and improve the accuracy of the estimated rotor angle used for motor control. The application of a Kalman filter further improves the estimation accuracy.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A method (100) for rotor angle estimation for a 3-phase BLDC or stepper motor which has a saliency ratio different from 1, comprising:

   - receiving (110) a requested duty cycle per motor phase from a motor control algorithm or receiving an output voltage per motor phase and deriving therefrom a requested duty cycle per motor phase,
   - providing (120) a PWM pattern to each of the motor phases during motor operation, wherein the PWM pattern per motor phase has the requested duty cycle per motor phase or wherein the PWM pattern per motor phase has the requested duty cycle per motor phase plus an equal fixed amount of duty cycle added to each of the requested duty cycles,
   **characterized in that** the method, furthermore, comprises
   - measuring (130) the current slopes of each motor phase during one or more active PWM pulses of that phase during the provided PWM pattern thereby obtaining a current slope per motor phase wherein the obtained current slope per motor phase is obtained from one current slope measurement per motor phase or as an average of a plurality of current slope measurements per motor phase,
   - comparing (140) normalized current slopes of the motor phases and estimating (150) the rotor angle based on the comparison wherein the normalized current slopes are obtained by normalizing the obtained current slopes of each phase using the obtained slope information collectively from all motor phases.

2. The method (100) according to claim 1, wherein the PWM pulses do not overlap during intervals when the current is measured.

3. The method (100) according to any of the previous claims, wherein measuring (130) the current slopes of each motor phase implies measuring the current of each motor phase at two different time points during each active PWM pulse of that phase and calculating the current slope by making the difference between the measured currents at the two different time points.

4. The method (100) according to any of the previous claims, wherein comparing (140) the normalized current slopes comprises:

   - computing (141) a reference current slope by averaging the current slopes of all motor phases,
   - determining (142) the normalized current slope per motor phase for each obtained current slope by subtracting the reference current slope from the obtained current slope or vice versa,
   - transforming (143) the normalized current slopes for the three phases in a two-dimensional current slope profile,

   and wherein estimating (150) the rotor angle is done based on the two-dimensional current slope profile.

5. The method (100) according to claim 1, wherein transforming (143) the normalized current slopes for the three phases in a two-dimensional current slope profile is done by performing a Clarke transformation on the normalized current slopes, thus obtaining an $\alpha$-component and a $\beta$-component for the current slope profile.

6. The method (100) according to claim 4, wherein the estimating (150) the rotor angle is done based on the arctangent of the ratio of the $\beta$-component and the $\alpha$-component or based on the atan2 of the $\beta$-component and the $\alpha$-component.

7. The method (100) according to any of the previous claims wherein estimating (150) the rotor angle is based on the comparison (140) and based on a rotor angle of an earlier position of the rotor.

8. A device (200) for rotor angle estimation of a 3-phase BLDC or stepper motor which has a saliency ratio different from 1, comprising:

   - a processor (210) configured to obtain a duty cycle per motor phase from a motor control algorithm or receiving an output voltage per motor phase and deriving therefrom a requested duty cycle per motor phase and calculating a duty cycle per phase
   - a PWM controller (220) configured to apply a PWM pattern to each motor phase wherein the PWM pattern per motor phase has the requested duty cycle per motor phase or wherein the PWM pattern per motor phase has the requested duty cycle per motor phase plus an equal fixed amount of duty cycle added to each of the requested duty cycles,
   - **characterized in that** the device (200) comprises at least one current sensor (230) for measuring current slopes of each motor phase during one or more active PWM pulses of that motor phase for obtaining a current slope per motor phase wherein the obtained current slope per motor phase is obtained from one current slope measurement per motor phase or as an average of a plurality of current slope measurements per motor phase,

   and, furthermore, **characterized in that** the processor (210) is configured for comparing normalized current slopes of the motor phases and estimating the rotor angle based on the comparison wherein the normalized current slopes are obtained by normalizing the obtained current slopes of each phase using the obtained slope information collectively from all motor phases.

9. The device (200) according to claim 8, wherein the PWM controller (220) is configured to apply the pattern of PWM pulses to each motor phases such that they are non-overlapping during the intervals when the current slopes are measured and wherein the at least one current sensor (230) is a single current sensor.

10. The device (200) according to any of the claims 8 or 9, wherein the at least one current sensor (230) is configured for measuring the current slopes for each of the phases by measuring the current of each motor phase at two different time points during the active PWM pulses of that phase and calculating the current slope by making the difference between the measured currents at the two different time points.

11. The device (200) according to any of the claims 8 to 10, wherein the processor (210) is configured for comparing the normalized current slopes by:

   - computing (141) a reference current slope by averaging the current slopes of all motor phases,
   - determining (142) the normalized current slope per motor phase for each obtained current slope by subtracting the reference current slope from the obtained current slope or vice versa,
   - transforming (143) the normalized current slopes for the three phases in a two-dimensional current slope profile,

   and wherein the processor (210) is configured for estimating (150) the rotor angle based on the two-dimensional current slope profile.

12. The device (200) according to claim 11, wherein the processor (210) is configured for transforming (143) the normalized current slopes for the three phases in a two-dimensional current slope profile by performing a Clarke transformation on the normalized current slopes, thus obtaining an $\alpha$-component and a $\beta$-component for the current slope profile.

13. The device (200) according to claim 12, wherein the processor (210) is configured for estimating (150) the rotor angle based on the arctangent of the ratio of the $\beta$-component and the $\alpha$-component or based on the atan2 of the $\beta$-component and the $\alpha$-component.

**14.** The device (200) according to any of the claims 8 to 13, wherein the processor (210) is configured for estimating (150) the rotor angle based on the comparison (140) and based on a rotor angle of an earlier position of the rotor.

**15.** A system (300) for controlling a 3-phase motor which is a BLDC or a stepper motor, wherein the system comprises the 3-phase motor (310) and wherein the 3-phase motor (310) has a saliency ratio different from 1, and a device (200) according to any of the claims 8 to 14, wherein the system is configured for driving the motor according to the rotor angle estimations provided by the rotor angle estimation device.

**Amended claims in accordance with Rule 137(2) EPC.**

**1.** A method (100) for rotor angle estimation for a 3-phase BLDC or stepper motor which has a saliency ratio different from 1, comprising:

- receiving (110) a requested duty cycle per motor phase from a motor control algorithm or receiving an output voltage per motor phase and deriving therefrom a requested duty cycle per motor phase,
- providing (120) a PWM pattern to each of the motor phases during motor operation, wherein the PWM pattern per motor phase has the requested duty cycle per motor phase or wherein the PWM pattern per motor phase has the requested duty cycle per motor phase plus an equal fixed amount of duty cycle added to each of the requested duty cycles,
**characterized in that** the method, furthermore, comprises
- measuring (130) the current slopes of each motor phase during one or more active PWM pulses of that phase during the provided PWM pattern thereby obtaining a current slope per motor phase wherein the obtained current slope per motor phase is obtained from one current slope measurement per motor phase or as an average of a plurality of current slope measurements per motor phase,
- comparing (140) normalized current slopes of the motor phases and estimating (150) the rotor angle based on the comparison wherein the normalized current slopes are obtained by normalizing the obtained current slopes of each phase using the obtained slope information collectively from all motor phases.

**2.** The method (100) according to claim 1, wherein the PWM pulses do not overlap during intervals when the current is measured.

**3.** The method (100) according to any of the previous claims, wherein measuring (130) the current slopes of each motor phase implies measuring the current of each motor phase at two different time points during each active PWM pulse of that phase and calculating the current slope by making the difference between the measured currents at the two different time points.

**4.** The method (100) according to any of the previous claims, wherein comparing (140) the normalized current slopes comprises:

- computing (141) a reference current slope by averaging the current slopes of all motor phases,
- determining (142) the normalized current slope per motor phase for each obtained current slope by subtracting the reference current slope from the obtained current slope or vice versa,
- transforming (143) the normalized current slopes for the three phases in a two-dimensional current slope profile, and wherein estimating (150) the rotor angle is done based on the two-dimensional current slope profile.

**5.** The method (100) according to claim 4, wherein transforming (143) the normalized current slopes for the three phases in a two-dimensional current slope profile is done by performing a Clarke transformation on the normalized current slopes, thus obtaining an $\alpha$-component and a $\beta$-component for the current slope profile.

**6.** The method (100) according to claim 4, wherein the estimating (150) the rotor angle is done based on the arctangent of the ratio of the $\beta$-component and the $\alpha$-component or based on the atan2 of the $\beta$-component and the $\alpha$-component.

**7.** The method (100) according to any of the previous claims wherein estimating (150) the rotor angle is based on the comparison (140) and based on a rotor angle of an earlier position of the rotor.

**8.** A device (200) for rotor angle estimation of a 3-phase BLDC or stepper motor which has a saliency ratio different from 1, comprising:

- a processor (210) configured to obtain a duty cycle per motor phase from a motor control algorithm or receiving an output voltage per motor phase and deriving therefrom a requested duty cycle per motor phase and calculating a duty cycle per phase

- a PWM controller (220) configured to apply a PWM pattern to each motor phase wherein the PWM pattern per motor phase has the requested duty cycle per motor phase or wherein the PWM pattern per motor phase has the requested duty cycle per motor phase plus an equal fixed amount of duty cycle added to each of the requested duty cycles,

- **characterized in that** the device (200) comprises at least one current sensor (230) for measuring current slopes of each motor phase during one or more active PWM pulses of that motor phase for obtaining a current slope per motor phase wherein the obtained current slope per motor phase is obtained from one current slope measurement per motor phase or as an average of a plurality of current slope measurements per motor phase,

and, furthermore, **characterized in that** the processor (210) is configured for comparing normalized current slopes of the motor phases and estimating the rotor angle based on the comparison wherein the normalized current slopes are obtained by normalizing the obtained current slopes of each phase using the obtained slope information collectively from all motor phases.

9. The device (200) according to claim 8, wherein the PWM controller (220) is configured to apply the pattern of PWM pulses to each motor phases such that they are non-overlapping during the intervals when the current slopes are measured and wherein the at least one current sensor (230) is a single current sensor.

10. The device (200) according to any of the claims 8 or 9, wherein the at least one current sensor (230) is configured for measuring the current slopes for each of the phases by measuring the current of each motor phase at two different time points during the active PWM pulses of that phase and calculating the current slope by making the difference between the measured currents at the two different time points.

11. The device (200) according to any of the claims 8 to 10, wherein the processor (210) is configured for comparing the normalized current slopes by:

- computing (141) a reference current slope by averaging the current slopes of all motor phases,
- determining (142) the normalized current slope per motor phase for each obtained current slope by subtracting the reference current slope from the obtained current slope or vice versa,
- transforming (143) the normalized current slopes for the three phases in a two-dimensional current slope profile, and wherein the processor (210) is configured for estimating (150) the rotor angle based on the two-dimensional current slope profile.

12. The device (200) according to claim 11, wherein the processor (210) is configured for transforming (143) the normalized current slopes for the three phases in a two-dimensional current slope profile by performing a Clarke transformation on the normalized current slopes, thus obtaining an $\alpha$-component and a $\beta$-component for the current slope profile.

13. The device (200) according to claim 12, wherein the processor (210) is configured for estimating (150) the rotor angle based on the arctangent of the ratio of the $\beta$-component and the $\alpha$-component or based on the atan2 of the $\beta$-component and the $\alpha$-component.

14. The device (200) according to any of the claims 8 to 13, wherein the processor (210) is configured for estimating (150) the rotor angle based on the comparison (140) and based on a rotor angle of an earlier position of the rotor.

15. A system (300) for controlling a 3-phase motor which is a BLDC or a stepper motor, wherein the system comprises the 3-phase motor (310) and wherein the 3-phase motor (310) has a saliency ratio different from 1, and a device (200) according to any of the claims 8 to 14, wherein the system is configured for driving the motor according to the rotor angle estimations provided by the rotor angle estimation device.

100

| 110 | Rx duty cycle/phase |
|---|---|

| 120 | Provide PWM pattern |
|---|---|

| 130 | Measure current slope/phase |
|---|---|

| 140 | Comparing slopes |
|---|---|

| Computing ref. slope | 141 |
|---|---|
| Determining norm. slopes | 142 |
| Transforming into 2D profile | 143 |

| 150 | Estim. rotor angle |
|---|---|

## FIG. 1

200

| 210 | | 230 |
|---|---|---|
| Proc. | | Current sensor |

| 220 | | 310 |
|---|---|---|
| PWM contr. | | Motor |

300

## FIG. 2

**FIG. 3**

**FIG. 4**

**FIG. 5**

## FIG. 6

## FIG. 7

**FIG. 8**

**FIG. 9**

# FIG. 10

## EUROPEAN SEARCH REPORT

**Application Number**

EP 25 17 8678

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 280 452 A1 (ORIENTAL MOTOR CO LTD [JP]) 22 November 2023 (2023-11-22) | 1-3, 7-10,14, 15 | INV. H02P6/00 H02P6/18 |
| Y | * paragraph [0042] - paragraph [0094]; figures 1A-6B *<br>* paragraphs [0003], [0112], [0116], [0134], [0209] *<br>----- | 4-6, 11-13 | H02P27/08 |
| X | WO 2020/161496 A1 (STANNAH STAIRLIFTS LTD [GB]) 13 August 2020 (2020-08-13) | 1,8 | |
| Y | * page 20, line 20 - page 39, line 6; figures 1A,1B,2A,2B,3-6 *<br>----- | 4-6, 11-13 | |

**TECHNICAL FIELDS SEARCHED (IPC)**

H02P

The present search report has been drawn up for all claims

| Place of search | Date of completion of the search | Examiner |
|---|---|---|
| Munich | 20 June 2025 | Landi, Matteo |

EPO FORM 1503 03.82 (P04C01)

## ANNEX TO THE EUROPEAN SEARCH REPORT
## ON EUROPEAN PATENT APPLICATION NO.

EP 25 17 8678

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | | Publication date | Patent family member(s) | | Publication date |
|---|---|---|---|---|---|
| EP 4280452 | A1 | 22-11-2023 | CN | 116802988 A | 22-09-2023 |
| | | | EP | 4280452 A1 | 22-11-2023 |
| | | | JP | 7662341 B2 | 15-04-2025 |
| | | | JP | 2022110307 A | 29-07-2022 |
| | | | KR | 20230131267 A | 12-09-2023 |
| | | | TW | 202249412 A | 16-12-2022 |
| | | | US | 2024178775 A1 | 30-05-2024 |
| | | | WO | 2022154027 A1 | 21-07-2022 |
| WO 2020161496 | A1 | 13-08-2020 | EP | 3921937 A1 | 15-12-2021 |
| | | | GB | 2581187 A | 12-08-2020 |
| | | | WO | 2020161496 A1 | 13-08-2020 |

EPO FORM P0459

For more details about this annex : see Official Journal of the European Patent Office, No. 12/82